# EUROPÄISCHE PATENTANMELDUNG

(11) **EP 2 623 886 A1**
(43) Veröffentlichungstag der Anmeldung: **07.08.2013**
(21) Anmeldenummer: 13153625.2
(22) Anmeldetag: 01.02.2013
(51) Int. Cl.: F24J 2/46, B08B 1/00, B08B 1/04, B08B 3/00

(54) **Vorrichtung zum Reinigen von Flächen**

(30) Priorität: 02.02.2012 DE 102012002046
(71) Anmelder: Jäger, Anton, 89250 Senden (DE)
(72) Erfinder: Jäger, Anton, 89250 Senden (DE)
(74) Vertreter: Manitz, Finsterwald & Partner GbR

(57) **Zusammenfassung**

Die Erfindung betrifft eine Vorrichtung zum Reinigen von Flächen, insbesondere an Solar- oder Photovoltaikanlagen, mit wenigstens einem Reinigungskopf, der zumindest ein Reinigungsorgan aufweist, insbesondere eine in Rotation versetzbare Bürste, und einer Mehrzahl von Zugeinheiten, die jeweils direkt oder indirekt mittels eines Zugorgans mit dem Reinigungskopf zusammenwirken, wobei der Reinigungskopf durch koordiniertes Verändern der wirksamen Längen der Zugorgane über die zu reinigende Fläche bewegbar ist.

## Beschreibung

Die Erfindung betrifft eine Vorrichtung zum Reinigen von Flächen, insbesondere an Solar- oder Photovoltaikanlagen.

Insbesondere der Reinigung von Solar- und Photovoltaikanlagen kommt in der Praxis eine immer größere Bedeutung zu.

Dabei kommt es nicht nur auf eine gute Reinigungswirkung an, sondern vor allem darauf, dass Anschaffung und Betrieb der Reinigungsvorrichtung möglichst kostengünstig sind, damit insgesamt ein möglichst wirtschaftlicher Betrieb der Solar- und Photovoltaikanlagen erreicht werden kann.

Aufgabe der Erfindung ist es daher, eine Reinigungsvorrichtung der eingangs genannten Art zu schaffen, welche die vorstehend erwähnten Anforderungen erfüllt.

Die Lösung dieser Aufgabe erfolgt durch die Merkmale des Anspruchs 1.

Erfindungsgemäß umfasst eine Reinigungsvorrichtung wenigstens einen Reinigungskopf, der zumindest ein Reinigungsorgan aufweist, sowie eine Mehrzahl von Zugeinheiten, die jeweils direkt oder indirekt mittels eines Zugorgans mit dem Reinigungskopf zusammenwirken, wobei der Reinigungskopf durch koordiniertes Verändern der wirksamen Längen der Zugorgane über die zu reinigende Fläche bewegbar ist.

Ein direktes Zusammenwirken zwischen Zugeinheit und Reinigungskopf, insbesondere ohne den Einsatz von fahrbaren Trägern und/oder Schlitten, ist konstruktiv besonders einfach und kostengünstig zu realisieren. Auch Wartungs- und Reparaturarbeiten am fahrbaren Träger und/oder Schlitten entfallen. Zudem gestaltet sich die Steuerung ohne Träger und/oder Schlitten einfacher.

Der erfindungsgemäße Reinigungskopf benötigt keinen integrierten Antrieb, um sich über die zu reinigende Fläche zu bewegen. Auch ist es nicht erforderlich, dass ein Benutzer den Reinigungskopf mit einer mechanischen Handhabe über die Fläche bewegt. Ferner ist die Erfindung nicht auf spezielle Führungseinrichtungen wie z.B. Führungsschienen oder Führungsseile für den Reinigungskopf angewiesen. Vielmehr genügt es erfindungsgemäß, wie auch immer geartete Halte- bzw. Angriffsmöglichkeiten für die Zugeinheiten bzw. deren Zugorgane zu schaffen. Insbesondere sind die Zugeinheiten, vorzugsweise die Halte- bzw. Angriffsmöglichkeiten für die Zugeinheiten bzw. deren Zugorgane, bezüglich der zu reinigenden Fläche ortsfest angeordnet. Bevorzugt werden diese während des Reinigungsvorgangs, insbesondere im Gegensatz zu Schlittensystemen, nicht bewegt.

Der Reinigungskopf kann mittels der Zugeinheiten vollkommen frei und in grundsätzlich beliebigen Bahnen über die zu reinigende Fläche bewegt werden. Hierzu benötigt der Reinigungskopf keinen eigenen Antrieb. Bei dem Reinigungskopf kann es sich insbesondere um eine vollkommen passive Einheit handeln, beispielsweise eine wie auch immer geartete Bürste, die durch den koordinierten Betrieb der Zugeinheiten in jeder gewünschten Weise über die zu reinigende Fläche bewegt werden kann.

Dabei ist es erfindungsgemäß möglich, aber nicht zwingend, den Reinigungskopf mit einem Tank für ein Reinigungsfluid, insbesondere Wasser, zu versehen. Alternativ oder zusätzlich kann beispielsweise vorgesehen sein, dass die Reinigung ausschließlich bei Regen erfolgt. Die erfindungsgemäße Reinigung kann auch dazu eingesetzt werden, die jeweilige Fläche von Schnee zu befreien. Auch ein bloßen "Fegen" der Fläche z.B. zum Beseitigen von Staub ist möglich, d.h. eine Reinigung ohne von wo auch immer stammendes Wasser kann durchgeführt werden.

In einer modifizierten Ausgestaltung kann eine bestimmte Position, insbesondere an einer der Zugeinheiten, vorgesehen sein, an welcher der Reinigungskopf betankt werden kann.

In einer praktisch besonders vorteilhaften Ausgestaltung sind die Zugeinheiten vom Reinigungskopf abgesetzt angeordnet. Insbesondere können die Zugeinheiten stationär außerhalb der jeweils zu reinigenden Fläche angeordnet werden. So können die Zugeinheiten beispielsweise lösbar an einem die zu reinigende Fläche umgebenden Rahmen angebracht sein.

Die Zugeinheiten können auch von der zu reinigenden Flächen getrennt angeordnet sein, z. B. an Ständern, die beabstandet von einer die zu reinigende Fläche beinhaltenden Solar- oder Photovoltaikanlage auf dem Boden stehen. Auf diese Weise kann ein sehr großer Bereich abgedeckt werden, insbesondere mehrere Reihen einer Freilandanlage.

Ein besonderer Vorteil der Erfindung besteht darin, dass die Vorrichtung nicht auf eine bestimmte Größe der zu reinigenden Fläche beschränkt ist. Da die Zugorgane durch das erfindungsgemäße Funktionsprinzip bedingt ohnehin in der Länge veränderlich sind, ist die Größe der jeweils zu reinigenden Fläche praktisch nur durch die jeweils maximal mögliche wirksame Länge der Zugorgane beschränkt. Diese maximale Länge der Zugorgane kann insbesondere durch die konkrete Ausgestaltung der Zugeinheiten vorgegeben sein.

Alternativ zu einer abgesetzten Anordnung kann erfindungsgemäß prinzipiell auch vorgesehen sein, die Zugeinheiten am Reinigungskopf selbst anzuordnen. In diesem Fall sind außerhalb der zu reinigenden Fläche insbesondere stationäre Halte- oder Verankerungseinrichtungen vorgesehen, an welchen die vom Reinigungskopf entfernt liegenden Enden der Zugorgane befestigt werden können. Auch bei diesem Funktionsprinzip kann durch einen koordinierten Betrieb der Zugeinheiten, der ein koordiniertes Verändern der wirksamen Längen der Zugorgane ermöglicht, der Reinigungskopf über die zu reinigende Fläche bewegt werden, indem sich der Reinigungskopf gewissermaßen selbst mithilfe seiner "an Bord befindlichen" Zugeinheiten über die zu reinigende Fläche zieht.

Ein Vorteil der zuvor erwähnten abgesetzten Anordnung der Zugeinheiten besteht darin, dass eine gegebenenfalls vorgesehene Energiezufuhr an die Zugeinheiten besonders einfach gestaltet werden kann, was von Bedeutung ist, wenn die Zugeinheiten jeweils mit einem Elektromotor, insbesondere Scheibenwischermotor, oder einer anderen auf Fremdenergie angewiesenen Antriebsquelle zum Verändern der wirksamen Länge des jeweiligen Zugorgans angewiesen sind.

Bei den Zugeinheiten kann es sich insbesondere um Seilwinden oder wie auch immer konkret ausgestaltete, insbesondere motorische Einrichtungen für ein definiertes Aufwickeln und Abwickeln des Zugorgans handeln. Die wirksamen Längen der Zugorgane und damit letztlich die maximale Größe der mit der betreffenden Vorrichtung zu reinigenden Fläche kann durch die Aufnahmekapazitäten der Zugeinheiten vorgegeben sein, also durch die maximale Zugorgan-Länge, die auf die Zugeinheiten jeweils aufgewickelt werden kann.

In einem bevorzugten Ausführungsbeispiel der Erfindung ist eine Steuereinrichtung vorgesehen, mittels welcher die Zugeinheiten zum koordinierten Verändern der wirksamen Längen der Zugorgane ansteuerbar sind, wobei dies insbesondere automatisch gemäß einem vorgegebenen Programm erfolgt. Dabei kann vorgesehen sein, dass ein Benutzer aus einer Mehrzahl von gespeicherten Programmen auswählen kann. Die Zugeinheiten können mit der Steuereinrichtung über Steueranleitungen verbunden sein, wobei eine Ansteuerung der Zugeinheiten alternativ auch drahtlos erfolgen kann.

Generell ist eine Zufuhr von Fremdenergie an die Zugeinheiten nicht zwingend. In Abhängigkeit von der konkreten Anwendung kann es genügen, die Zugeinheiten für einen Akkumulator- bzw. Batteriebetrieb auszulegen.

Gemäß einer weiteren Ausführungsform ist ein, insbesondere mechanischer, Puffer vorgesehen, wobei durch den Puffer ein Teil zumindest eines Zugorgans aufnehmbar und/oder abgebbar ist. Bei dem Puffer kann es sich beispielsweise um einen Speicher z. B. in Form einer Feder oder um eine Spule handeln, die insbesondere einfach federbelastet ist oder elektrisch angetrieben sein kann. Der Puffer kann z.B. einen Teil des Zugorgans speichern und bei Bedarf wieder abgeben. Dadurch können insbesondere Unregelmäßigkeiten und/oder Abweichungen bei der Bewegung des Reinigungskopfes toleriert bzw. kompensiert werden.

Bevorzugt dient der Puffer dazu bzw. ist dieser dazu ausgebildet, Ungenauigkeiten einer Steuereinrichtung auszugleichen. Der Reinigungskopf kann somit insbesondere auch bei unpräziser Steuerung die gesamte zu reinigende Fläche erreichen und exakt über die Fläche geführt werden.

Der Puffer kann im Reinigungskopf und/oder in einer Zugeinheit, insbesondere in einer Halte- bzw. Angriffsmöglichkeit, angeordnet sein.

In einer vorteilhaften Weiterbildung der Erfindung ist vorgesehen, dass das Reinigungsorgan des Reinigungskopfes dazu in der Lage ist, eine Reinigungsbewegung relativ zum Reinigungskopf durchzuführen. Die Reinigungswirkung wird hierbei nicht ausschließlich durch die Bewegung des Reinigungskopfes selbst relativ zu der zu reinigenden Fläche erzielt, sondern zusätzlich oder zum zumindest überwiegenden Teil durch die zusätzliche Reinigungsbewegung des Reinigungsorgans.

Um einem beispielsweise hierzu am Reinigungskopf vorgesehenen Antrieb für das Reinigungsorgan mit Fremdenergie zu versorgen, können in einer Ausgestaltung der Erfindung die Zugorgane oder zumindest ein Zugorgan genutzt werden. Beispielsweise ist es möglich, in ein aus einem elektrisch nichtleitenden Material hergestelltes Zugseil einen Stromleiter zu integrieren, beispielsweise durch Einspinnen eines oder mehrerer Kupferdrähte.

Alternativ kann zum Erzeugen einer Reinigungsbewegung des Reinigungsorgans die während des Reinigungsvorgangs zum Bewegen des Reinigungskopfes erfolgende Veränderung der wirksamen Längen der Zugorgane genutzt werden.

So ist es beispielsweise möglich, einen insbesondere mechanischen Kraft- bzw. Energiespeicher vorzusehen, der dazu ausgebildet ist, durch den koordinierten Betrieb der Zugeinheiten gefüllt und entleert zu werden. Bei dem Speicher kann es sich beispielsweise um eine Federanordnung handeln.

Dabei kann der koordinierte Betrieb der Zugeinheiten darauf abgestellt sein, dass beispielsweise der direkt oder indirekt mit zumindest einem Zugorgan verbundene Speicher gefüllt wird, indem beispielsweise eine Feder gespannt wird, wobei anschließend die sich entspannende Feder mittels eines geeigneten Antriebsmechanismus für die gewünschte Relativbewegung des Reinigungsorgans bezüglich eines Trägers und somit für die Reinigungsbewegung des Reinigungsorgans relativ zu der zu reinigenden Fläche sorgt.

Ein besonderer Vorteil einer derartigen Ausgestaltung ist, dass sie ausschließlich auf mechanischem Wege erfolgen kann, sodass dem Reinigungskopf keine Fremdenergie im eigentlichen Sinne zugeführt zu werden braucht, um gleichwohl eine für eine effektive Reinigung der jeweiligen Fläche vorteilhafte Reinigungsbewegung des Reinigungsorgans zu erzeugen.

Insbesondere ist der Reinigungskopf durch einen koordinierten Betrieb der Zugeinheiten zu einem Intervallbetrieb in der Lage, bei dem der Speicher abwechselnd gefüllt und entleert wird, wobei das Entleeren des Speichers zumindest teilweise zur Erzeugung einer Reinigungsbewegung des Reinigungsorgans nutzbar ist. Insbesondere ist bei diesem Intervallbetrieb vorgesehen, dass der Reinigungskopf in Bezug auf die zu reinigende Fläche beim Füllen des Speichers stillsteht und sich beim Entleeren des Speichers über die zu reinigende Fläche bewegt.

Generell sind erfindungsgemäß die unterschiedlichsten Bewegungsabläufe für den Reinigungskopf in Verbindung mit einem abwechselnden Füllen und Entleeren des Speichers möglich. Allgemein kann zum Erzeugen einer gewünschten Reinigungsbewegung des am Reinigungskopf vorgesehenen Reinigungsorgans der Umstand ausgenutzt werden, dass durch einen geeigneten koordinierten Betrieb der Zugeinheiten der Reinigungskopf von jeder Zugeinheit entweder gezielt festgehalten oder gezogen werden kann, und zwar in Bezug auf die durch die Orientierung des betreffenden Zugorgans jeweils vorgegebene Richtung. Eine durch den gemeinsamen Betrieb der Zugeinheiten resultierende Kraft, die nicht oder nicht ausschließlich eine Bewegung des Reinigungskopfes relativ zu der zu reinigenden Fläche zur Folge hat, kann für einen grundsätzlich beliebigen Zusatzzweck genutzt werden, insbesondere zum Betätigen eines beispielsweise mechanischen Kraft- bzw. Energiespeichers, wie es vorstehend beispielhaft erläutert wurde.

In einem möglichen Ausführungsbeispiel ist eine Anordnung vorgesehen, in welcher sich die Zugorgane jeweils geradlinig zwischen der jeweiligen Zugeinheit und dem Reinigungskopf bzw. der jeweiligen Zugeinheit und einem Halte- oder Verankerungselement erstrecken, wie es vorstehend beispielhaft bereits erläutert wurde.

In einer weiteren Ausgestaltung der Erfindung kann wenigstens eine Umlenkeinrichtung vorgesehen sein, mit welcher ein erstes Zugorgan umlenkbar und die mittels eines zweiten Zugorgans relativ zu der zu reinigenden Fläche bewegbar ist. Eine derartige Ausgestaltung kann in bestimmten Anwendungen bzw. in Verbindung mit bestimmten Steuereinrichtungen oder Steuerprogrammen von Vorteil sein.

Die Umlenkeinrichtung, bei der es sich beispielsweise um eine an einem Träger angebrachte Umlenkrolle handelt, kann dazu ausgebildet sein, längs der zu reinigenden Fläche geführt zu werden. Hierzu kann beispielsweise ein ohnehin vorhandener, die zu reinigende Fläche begrenzender Rahmen genutzt werden. Beispielsweise kann ein Träger für eine Umlenkrolle längs eines derartigen Rahmens frei verschiebbar geführt sein. Vorzugsweise ist jedoch kein Träger oder Schlitten für die Umlenkrolle vorgesehen. Die Umlenkrolle kann entweder frei bewegt oder z.B. unmittelbar an einem die zu reinigende Fläche begrenzenden Rahmen geführt werden. Ein aufwändiger Träger oder Schlitten bzw. ein Führungssystem, gegebenenfalls mit Führungsschienen, ist somit nicht notwendig.

Ein Kraft- oder Energiespeicher, wie er beispielhaft vorstehend erläutert wurde, kann am Reinigungskopf vorgesehen sein, wobei dies aber nicht zwingend ist.

Des Weiteren kann vorgesehen sein, dass ein Kraft- oder Energiespeicher, wie er vorstehend beispielhaft erläutert wurde, zwischen den Reinigungskopf und zumindest ein Zugorgan geschaltet ist.

Um zu verhindern, dass außerhalb des Reinigungsbetriebs der Reinigungskopf auf der Fläche liegt und dabei im Falle einer Solar- oder Photovoltaikanlage für eine nachteilige Verschattung der wirksamen Fläche führt, kann gemäß einer Ausgestaltung der Erfindung vorgesehen sein, dass an zumindest einer Zugeinheit eine außerhalb der zu reinigenden Fläche liegende Parkposition für den Reinigungskopf vorgesehen ist.

Insbesondere kann die Zugeinheit derart ausgeführt sein, dass sie einerseits an einem die zu reinigende Fläche umgebenden Rahmen, insbesondere in einem Eckbereich, angebracht werden kann, wobei die Zugeinheit andererseits mit einem Aufnahmebereich für den Reinigungskopf versehen ist. Der Reinigungskopf kann dann nach Abschluss eines Reinigungsvorgangs von der zu reinigenden Fläche herunter und in die von dem Aufnahmebereich bereitgestellte Parkposition hinein gezogen werden.

An Parkpositionen für den Reinigungskopf können Träger bzw. Aufnahmebereiche, auf die an anderer Stelle anhand von Beispielen näher eingegangen wird, zum Betanken des Reinigungskopfes ausgebildet sein, um z.B. einen Wasserbehälter des Reinigungskopfes aufzufüllen.

Es kann genügen, dass die erfindungsgemäße Reinigungsvorrichtung einen einzigen Reinigungskopf aufweist.

Alternativ kann vorgesehen sein, dass eine Mehrzahl von Reinigungsköpfen vorgesehen ist, beispielsweise zwei Reinigungsköpfe, die gleichzeitig mittels jeweils zugeordneter Zugeinheiten über die zu reinigende Fläche bewegt werden können. Dabei kann vorgesehen sein, dass entweder mehrere Zugeinheiten im Wesentlichen am gleichen Ort angeordnet sind, wobei jede Zugeinheit einem der Reinigungsköpfe zugeordnet ist, oder dass eine Zugeinheit mit mehreren Seilwinden oder Wickeleinrichtungen versehen ist, die jeweils einem der Reinigungsköpfe zugeordnet sind. Hierbei ist es insbesondere möglich, die Wickeleinrichtungen koaxial übereinander, d.h. in unterschiedlichen Ebenen anzuordnen. Dies hat den Vorteil, dass für eine Mehrzahl von Seilwinden bzw. Wickeleinrichtungen nur ein einziger Träger oder Halter beispielsweise zur Anbringung an einem die zu reinigende Fläche begrenzenden Rahmen erforderlich ist. Eine Anordnung aus mehreren Seilwinden bzw. Wickeleinrichtungen, die im Wesentlichen am gleichen Ort und dabei insbesondere koaxial in unterschiedlichen Ebenen übereinander angeordnet sind, kann ebenfalls eine Zugeinheit im Sinne der Erfindung bilden.

Hierbei ist es beispielsweise möglich, an den vier Eckbereichen eines eine viereckige zu reinigende Fläche begrenzenden Rahmens jeweils eine Zugeinheit anzuordnen, wobei ein Paar von einander diagonal gegenüberliegenden Zugeinheiten jeweils zwei Seilwinden bzw. Wickeleinrichtungen aufweist, die jeweils einem von zwei Reinigungsköpfen zugeordnet ist. Jeweils drei dieser sechs Seilwinden bzw. Wickeleinrichtungen können mit dem ihnen zugeordneten Reinigungskopf einen dreieckigen Bereich der zu reinigenden Fläche bearbeiten, wobei sich die beiden dreieckigen Bereiche zu der zu reinigenden Fläche ergänzen.

Ein Vorteil einer derartigen Anordnung besteht darin, dass bei Nichtbenutzung und außerhalb der zu reinigenden Fläche "geparkten" Reinigungsköpfen auch die Zugorgane nicht über die Fläche hinweg verlaufen müssen.

Jede erfindungsgemäße Anordnung, die vermeidet, dass Zugorgane bei Nichtbenutzung über die zu reinigende Fläche hinweg verlaufen, hat unter anderem die Vorteile, dass eine solche "aufgeräumte" Anordnung nicht zu Verschattungen führt und nicht die Gefahr besteht, dass abrutschender Schnee da oder die Zugorgane mitreißt und eventuell beschädigt.

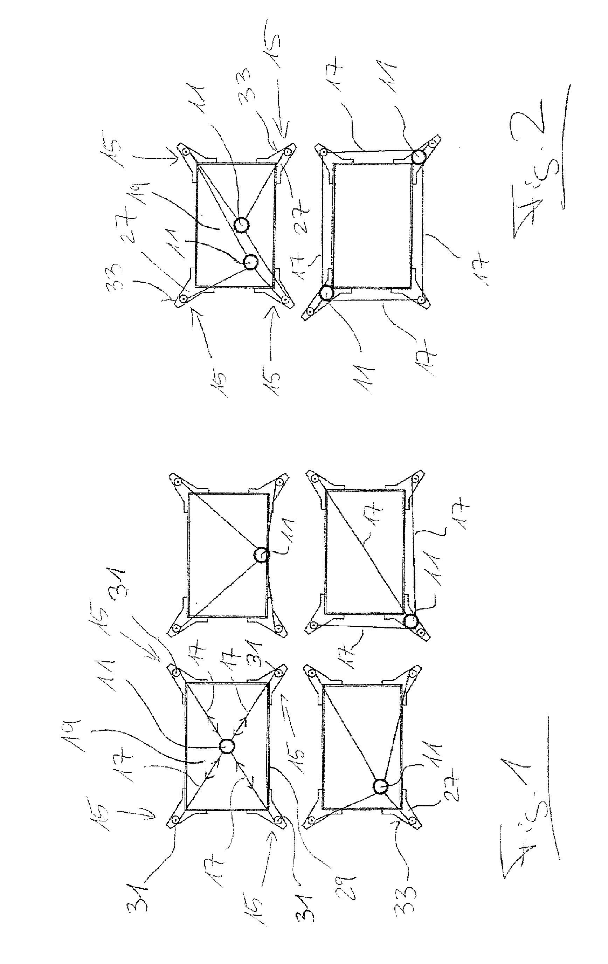

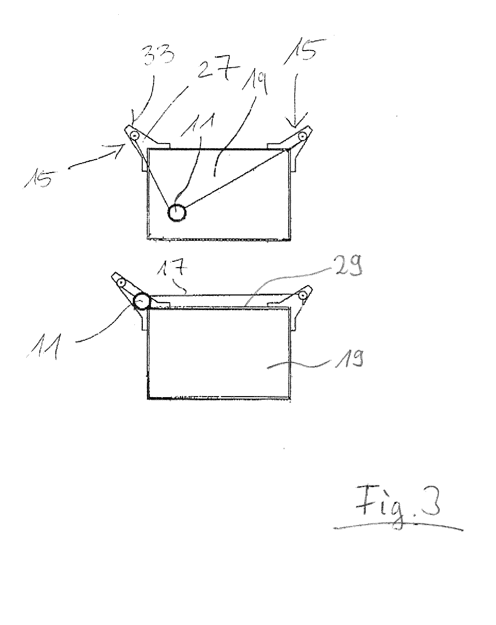

Selbst bei Anordnungen, in denen bei Nichtbenutzung die Zugorgane in einer Parkposition außerhalb der zu reinigenden Fläche verlaufen (vgl. z.B. nachstehend Fig. 2), kann z.B. abrutschender Schnee von Nachteil sein, so dass diesbezüglich von besonderem Vorteile solche erfindungsgemäßen Anordnungen sind, bei denen lediglich obere Zugeinheiten (vgl. z.B. nachstehend Fig. 3 mit zugehöriger Beschreibung) vorgesehen sind.

Gemäß einem Ausführungsbeispiel der Erfindung kann zumindest ein Zugorgan als Fluidzufuhrleitung ausgebildet sein, um auf diese Weise dem

Reinigungskopf ein Reinigungsfluid, insbesondere Wasser, zuführen und/oder die zu reinigende Fläche im Bereich des Reinigungskopfes gezielt benetzen zu können. Bevorzugt können hierzu Hochdruckleitungen oder -schläuche eingesetzt werden, die einen Außendurchmesser von nicht mehr als 10mm, insbesondere von höchstens 5 bis 6mm, aufweisen, um so gegebenenfalls bei relativ großer Länge nur einen relativ kleinen Platzbedarf beim Verstauen, insbesondere beim Aufwickeln, der Leitung zu haben.

Weitere bevorzugte Ausgestaltungen der Erfindung sind auch in den abhängigen Ansprüchen, der Beschreibung sowie der Zeichnungen angegeben.

Die Erfindung wird im Folgenden beispielhaft unter Bezugnahme auf die Zeichnungen beschrieben. Es zeigen:
- Fig. 1: schematisch verschiedene mögliche Positionen eines Reinigungskopfes auf einer zu reinigenden Fläche gemäß einer Ausführungsform der Erfindung,
- Fig. 2: in einer Darstellung entsprechend Fig. 1 verschiedene Betriebszustände einer Anordnung gemäß einer weiteren Ausführungsform der Erfindung,
- Fig. 3: in einer Darstellung entsprechend Fig. 1 verschiedene Betriebszustände einer Anordnung gemäß einer weiteren Ausführungsform der Erfindung,
- Fig. 4: eine weitere Ausführungsform der Erfindung,
- Fig. 5a und 5b: eine weitere Ausführungsform einer erfindungsgemäßen Reinigungsvorrichtung,
- Fig. 6: in vergrößerter Darstellung einen Teil von Fig. 5a, und
- Fig. 7a und 7b: jeweils in vergrößerter schematischer Darstellung einen Reinigungskopf.

Fig. 1 zeigt schematisch eine erfindungsgemäße Reinigungsvorrichtung an einer zu reinigenden Fläche 19, die beispielsweise zu einer Solar- oder Photovoltaikanlage gehört.

Die Fläche 19 ist von einem Rahmen 29 begrenzt. An jedem Eckbereich des Rahmens 29 ist außerhalb der Fläche 19 eine Zugeinheit 15 lösbar angebracht. Jede Zugeinheit 15 ist mit einer Wickeleinrichtung 31 z.B. in Form einer, insbesondere mittels eines Scheibenwischermotors, motorisch angetriebenen Seilwinde versehen. Auf jede Wickeleinrichtung 31 ist ein Zugorgan 17 in Form eines Zugseils, insbesondere eines Kunststoffseils oder einer geflochtenen Schnur, gewickelt. Je nach Drehrichtung der Wickeleinrichtung 31 kann die wirksame Länge des Zugorgans 17 verändert werden, indem entweder das Zugorgan 17 aufgewickelt und dadurch die wirksame Länge verkürzt oder zur Vergrößerung der wirksamen Länge das Zugorgan 17 abgewickelt wird, wie es durch die Doppelpfeile in Fig. 1 angedeutet ist.

Jedes Zugorgan 17 ist mit seinem freien Ende an einem hier nur schematisch dargestellten Reinigungskopf 11 befestigt, der beispielsweise eine Bürste umfasst.

Indem mit jeder Zugeinheit 15 über das jeweilige Zugorgan 17 durch Aufwickeln am Reinigungskopf 11 gezogen oder durch Abwickeln Länge zugegeben werden kann, resultiert bei einem entsprechend koordinierten Betrieb der Zugeinheiten 15 eine resultierende Kraft, die den Reinigungskopf 11 über die zu reinigende Fläche 19 bewegt.

Durch dieses Prinzip ist der Reinigungskopf 11 entlang beliebiger Reinigungsbahnen bzw. gemäß beliebiger Bewegungsmuster auf der zu reinigenden Fläche 19 bewegbar. Die einzelnen Darstellungen der Fig. 1 zeigen rein beispielhaft mögliche Positionen des Reinigungskopfes 11.

Wie die Darstellung unten rechts in Fig. 1 zeigt, kann der Reinigungskopf 11 in eine außerhalb der Fläche 19 gelegene Parkposition gefahren werden. Hierzu ist jede Zugeinheit 15 mit einem Aufnahmebereich 27 versehen.

In dem Ausführungsbeispiel der Fig. 2 sind zwei Reinigungsköpfe 11 vorgesehen. Zwei einander diagonal gegenüberliegende Zugeinheiten 15 (in Fig. 2 unten links und oben rechts) sind mit zwei Wickeleinrichtungen versehen, die in einer Richtung senkrecht zu der zu reinigenden Fläche 19 koaxial übereinander angeordnet sind. Jede dieser Wickeleinrichtungen wirkt mit einem der beiden Reinigungsköpfe 11 zusammen. Die beiden anderen Zugeinheiten 15 wirken jeweils nur mit einem der beiden Reinigungsköpfe 11 zusammen.

Bei dieser Anordnung sind die beiden Reinigungsköpfe 11 unabhängig voneinander in einem jeweiligen dreieckigen Bereich der zu reinigenden Fläche 19 bewegbar. Wie die untere Darstellung in Fig. 2 zeigt, hat diese Anordnung den Vorteil, dass bei in einer jeweiligen Parkposition befindlichen Reinigungsköpfen 11 auch die Zugorgane 17 außerhalb der zu reinigenden Fläche 19 liegen.

In den hier erläuterten Ausführungsbeispielen umfasst jede Zugeinheit 15 einen Träger 33, über den die Zugeinheit 15 an dem Rahmen 29 angebracht und an dem eine oder mehrere Wickeleinrichtungen angeordnet sind. Der Träger 33 ist ferner so ausgebildet, dass außerhalb eines Reinigungsbetriebs der Reinigungskopf 11 in dem bereits erwähnten Aufnahmebereich 27 aufgenommen werden kann.

Im Ausführungsbeispiel gemäß Fig. 3 sind lediglich an zwei Eckbereichen des Rahmens 29 oberhalb einer geneigten Fläche 19, am höchsten Punkt der Schräge, jeweils eine Zugeinheit 15 lösbar angebracht. Der Reinigungskopf 11 kann mittels zweier Wickeleinrichtungen bzw. Motoren nach oben und nach unten alleine aufgrund der Schwerkraft die gesamte Fläche 19 erreichen. Das Gewicht des Reinigungskopfes 11 wird dabei in Abhängigkeit von der Neigung der Fläche 19 insbesondere derart gewählt, dass der Reinigungskopf 11 schwer genug ist und so vertikal zuverlässig positioniert werden kann. Durch ein höheres Gewicht wird dies vereinfacht. Auch ist der Reinigungskopf 11 durch ein höheres Gewicht z.B. weniger anfällig bei Wind.

Diese Reinigungsvorrichtung gestaltet sich besonders kostengünstig, da lediglich zwei Zugeinheiten 15 anstatt drei oder vier Zugeinheiten 15 vorgesehen sind.

Bei längeren Flächen 19 können mehrere dieser Vorrichtungen mit je einem Reinigungskopf 11 nebeneinander angeordnet werden. Insbesondere ist dies bei Freilandanlagen sinnvoll.

Derartige Reinigungsvorrichtungen können z.B. in wärmeren, schneefreien und/oder windarmen Regionen zum Einsatz kommen. Insbesondere können diese bei einem Solarpanel-Tracker, d.h. einem in der Neigung verstellbaren Solarpanel, eingesetzt werden.

Wie die untere Darstellung in Fig. 3 zeigt, hat auch diese Anordnung den Vorteil, dass bei in einer jeweiligen Parkposition befindlichen Reinigungsköpfen 11 auch die Zugorgane 17 außerhalb der zu reinigenden Fläche 19 liegen.

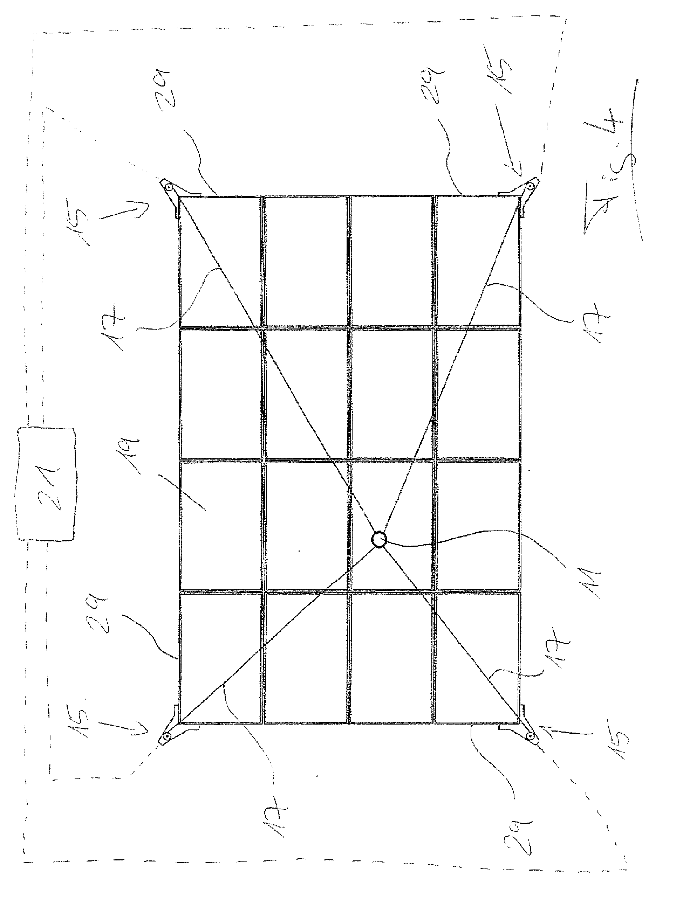

Das Ausführungsbeispiel der Fig. 4 zeigt eine erfindungsgemäße Reinigungsvorrichtung, die an einer zu reinigenden Fläche 19 angeordnet ist, welche aus einer Vielzahl von einzelnen Feldern besteht. Zwischen den einzelnen Feldern befindliche Rahmen oder Stege können von dem Reinigungskopf 11 problemlos überquert werden.

Die Zugeinheiten 15 bzw. die Wickeleinrichtungen der Zugeinheiten 15 sind jeweils mit einer gemeinsamen Steuereinrichtung 21 verbunden, wie in Fig. 4 durch die gestrichelten Linien angedeutet ist. In der Steuereinrichtung 21 können verschiedene Reinigungsprogramme abgelegt sein, die von einem Benutzer ausgewählt werden können. Der koordinierte Betrieb der Zugeinheiten 15 bzw. der Wickeleinrichtungen 31 erfolgt gemäß einem ausgewählten Reinigungsprogramm und sorgt für eine Bewegung des Reinigungskopfes 11 über die zu reinigende Fläche 19 gemäß einer durch das ausgewählte Reinigungsprogramm vorgegebenen Bahn.

Die Reinigung der Fläche 19 kann beispielsweise zeilen- oder spaltenweise erfolgen. Das Programm kann auch berücksichtigen, dass auf der zu reinigenden Fläche Hindernisse vorhanden sind, die vom Reinigungskopf 11 umfahren werden müssen.

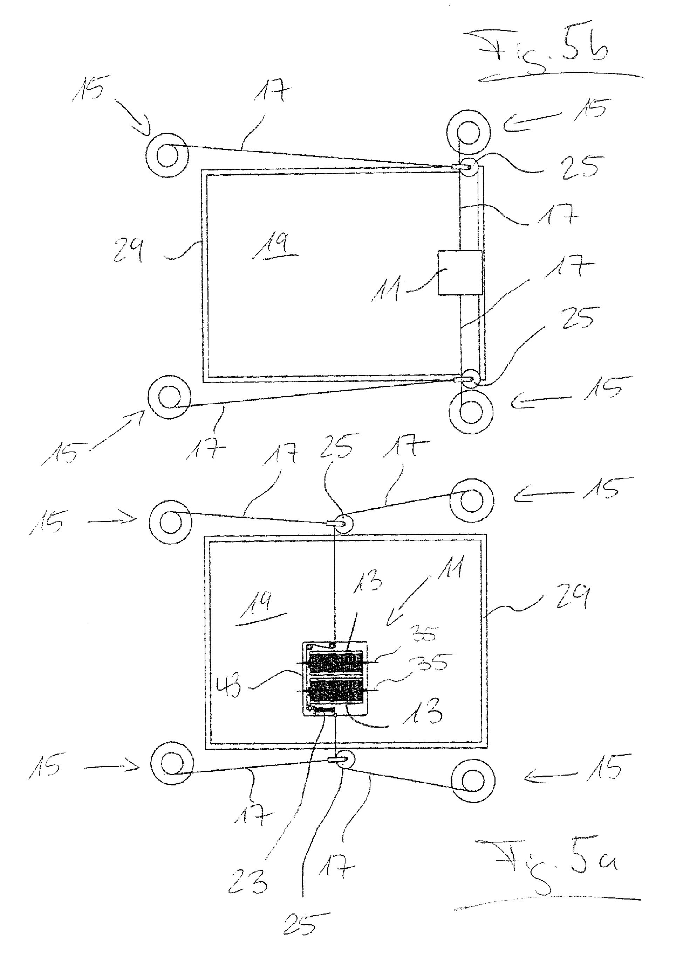

Das Ausführungsbeispiel der Fig. 5a und 5b zeigt insbesondere zwei erfindungsgemäße Aspekte, die auch unabhängig voneinander realisiert sein können, die also nicht zwingend in Kombination miteinander vorgesehen sein müssen.

Gemäß einem Aspekt sind zwei Zugeinheiten 15 (in Fig. 5a und 5b links oben und links unten) über ihre Zugorgane 17 nicht unmittelbar mit dem Reinigungskopf 11 verbunden, sondern mit einer Umlenkeinrichtung 25, die eine Umlenkrolle sowie einen Träger umfasst, an welchem die Umlenkrolle drehbar angebracht und welcher längs eines die zu reinigende Fläche 19 begrenzenden Rahmens 29 verschiebbar geführt ist.

Die Zugorgane 17 der beiden anderen Zugeinheiten 15 laufen jeweils über eine dieser Umlenkrollen. Die veränderbaren Positionen der Umlenkrollen 25 bestimmen den Verlauf der jeweils anderen Zugorgane 17, wie ein Vergleich der Fig. 5a und 5b zeigt.

Auch auf diese Weise kann durch einen koordinierten Betrieb der Zugeinheiten 15 und somit durch ein koordiniertes Verändern der wirksamen Längen der Zugorgane 17 der Reinigungskopf 11 jede Stelle auf der Fläche 19 erreichen und somit längs beliebiger Bahnen oder Muster über die Fläche 19 bewegt werden.

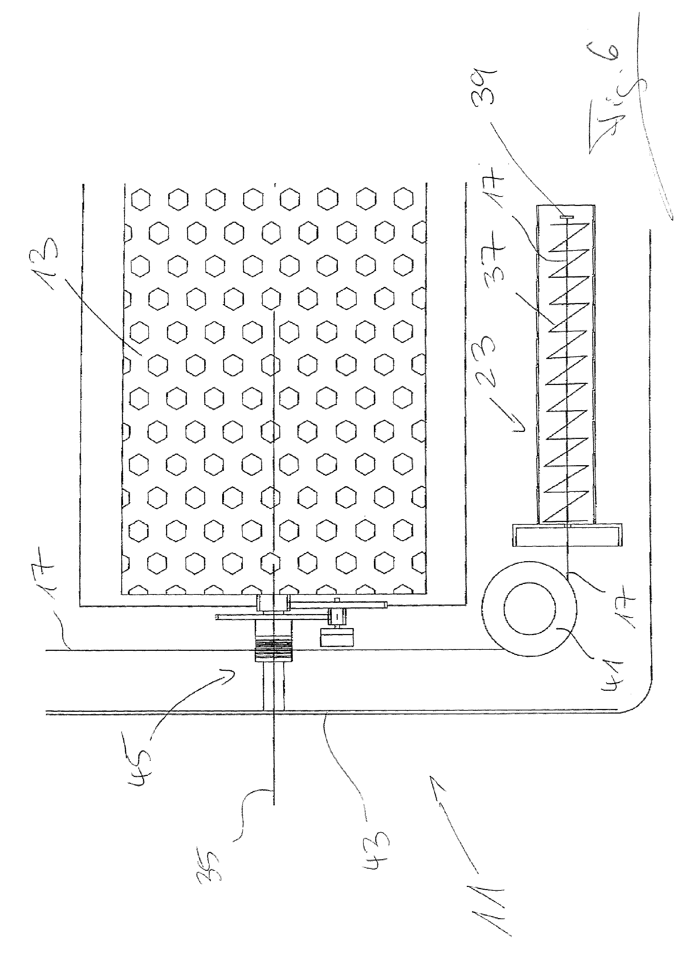

Während in Fig. 5b der Reinigungskopf 11 lediglich schematisch dargestellt ist, zeigt Fig. 5a einen weiteren Aspekt der Erfindung, der nachfolgend auch in Bezug auf Fig. 6 beschrieben wird, die in einer vergrößerten Darstellung einen Teil des Reinigungskopfs 11 gemäß Fig. 5a zeigt.

In diesem Ausführungsbeispiel ist der Reinigungskopf 11 mit zwei parallel angeordneten Bürstenwalzen 13 versehen, deren Drehachsen 35 parallel zu der zu reinigenden Fläche 19 verlaufen. Die Bürstenwalzen 13 können sich relativ zu einem Träger 43 des Reinigungskopfes 11 drehen und so eine Reinigungsbewegung relativ zu dem Träger 43 ausführen.

In dem dargestellten Ausführungsbeispiel können die Bürstenwalzen 13 mittels einer Federanordnung 37 in Drehung versetzt werden, die einen mechanischen Kraft- bzw. Energiespeicher des Reinigungskopfs 11 bildet.

Wie insbesondere Fig. 6 zeigt, ist ein Zugorgan 17, das über mehrere am Träger 43 angebrachte Umlenkrollen 41 geführt wird, mit einer hier nur schematisch angedeuteten Feder 37 gekoppelt, und zwar über einen am Ende des Zugorgans 17 angebrachten Spannabschnitt 39. Wird die wirksame Länge dieses Zugorgans 17 verkürzt, kann die Feder 37 gespannt werden, wenn der Reinigungskopf 11 mittels der anderen Zugeinheiten 15 festgehalten wird. Unter "Festhalten" ist hier nicht nur ein Verharren des Reinigungskopfes 11 relativ zu der Fläche 19 zu verstehen, sondern auch ein "Gegenhalten" mittels der anderen Zugeinheiten 15 derart, dass sich der Reinigungskopf 11 zwar über die Fläche 19 bewegt, aber gleichwohl eine resultierende Kraft vorhanden ist, welche die Feder 37 des Speichers 23 spannen kann.

Während des Spannens der Feder 37 kann sich somit der Reinigungskopf 11 über die Fläche 19 bewegen, wobei dies aber nicht zwingend und letztlich von dem jeweiligen Reinigungsprogramm, also von dem konkreten, jeweils stattfindenden koordinierten Verändern der wirksamen Längen der Zugorgane 17 abhängig ist.

Generell kann der in diesem Ausführungsbeispiel von der Feder 37 gebildete Speicher 23 in beliebiger Art und Weise mit den Bürstenwalzen 13 gekoppelt sein. In dem Beispiel der Fig. 6 erfolgt diese Kopplung über das Zugseil 17 selbst. Das Zugseil 17 kann beispielsweise um Wellenabschnitte der Bürstenwalze 13 geschlungen sein, so dass eine Bewegung des Zugseils 17 relativ zu dem Träger 43 des Reinigungskopfes 11 eine Drehung der Bürstenwalzen 13 relativ zu dem Träger erzeugt. Eine derartige, in diesem Beispiel das Zugorgan 17 selbst mit einbeziehende Antriebseinrichtung 45 ist in Fig. 6 angedeutet.

Nachdem die Feder 37 gespannt worden ist, kann durch einen entsprechend koordinierten Betrieb der Zugeinheiten 15 der Feder 37 gestattet werden, sich zu entspannen, und zwar derart, dass sich das mit der Feder 37 gekoppelte Zugseil 17 relativ zu dem Träger 43 bewegt, wodurch über die Antriebseinrichtung 45 die Bürstenwalzen 13 in Rotation relativ zu dem Träger 43 versetzt werden.

Die für eine effektive Reinigung der Fläche 19 maßgebliche Umfangsgeschwindigkeit der Bürstenwalzen 13 kann beispielsweise durch ein in die Antriebseinrichtung 45 integriertes oder der Antriebseinrichtung 45 zugeordnetes Getriebe grundsätzlich beliebig vorgegeben werden.

Durch eine derartige, rein mechanische Lösung, welche das ohnehin zum Bewegen des Reinigungskopfes 11 über die Fläche 19 erforderlich koordinierte Verändern der wirksamen Längen der Zugorgane 17 nutzt, kann auf einfache und zuverlässige Weise zusätzlich zu dieser Bewegung des Reinigungskopfes 11 eine Reinigungsbewegung der jeweiligen Reinigungsorgane - hier der Bürstenwalzen 13 - erzeugt werden.

Das Bewegen des Reinigungskopfes 11 über die Fläche 19, das Spannen und Entspannen der Feder 37 - allgemein also das Füllen und Entleeren des Speichers 23 - sowie die Reinigungsbewegung eines oder mehrerer am Reinigungskopf 11 vorgesehener Reinigungsorgane - hier der Bürstenwalzen 13 - kann in grundsätzlich beliebiger Weise durch einen entsprechend koordinierten Betrieb der Zugeinheiten realisiert werden.

Besondere Vorteile der Erfindung bestehen darin, dass wie auch immer geartete Führungseinrichtungen wie z.B. Führungsschienen oder Führungsseile, die bei aus dem Stand der Technik bekannten Reinigungsvorrichtungen zwingend notwendig sind, nicht benötigt werden, wobei die Nutzung derartiger Führungseinrichtungen durch die Erfindung aber auch nicht ausgeschlossen ist, wie das Ausführungsbeispiel der Fig. 5a und 5b mit den Umlenkrollen 25 zeigt.

Ferner benötigt die erfindungsgemäße Reinigungsvorrichtung nur ein Minimum an Bauteilen. Sowohl die Zugeinheiten 15 als auch die Zugorgane 17 können baugleich ausgeführt werden.

Des Weiteren ist die erfindungsgemäße Reinigungsvorrichtung äußerst schmutzunempfindlich, da Einrichtungen zum Aufwickeln und Abwickeln von Seilen in kostengünstigen und gleichzeitig robusten und zuverlässigen Ausführungen erhältlich sind.

Ferner ist von Vorteil, dass die Druckbelastung für die zu reinigende Fläche 19 minimal ist, da der Reinigungskopf 11 ein vergleichsweise geringes Eigengewicht besitzt und nicht mit einem eigenen Antrieb versehen werden muss, und zwar weder mit einem Antrieb für die Eigenbewegung des Reinigungskopfes 11 relativ zur Fläche 19, noch mit einem Antrieb für eine gegebenenfalls gewünschte zusätzliche Reinigungsbewegung des Reinigungsorgans relativ zum Reinigungskopf 11.

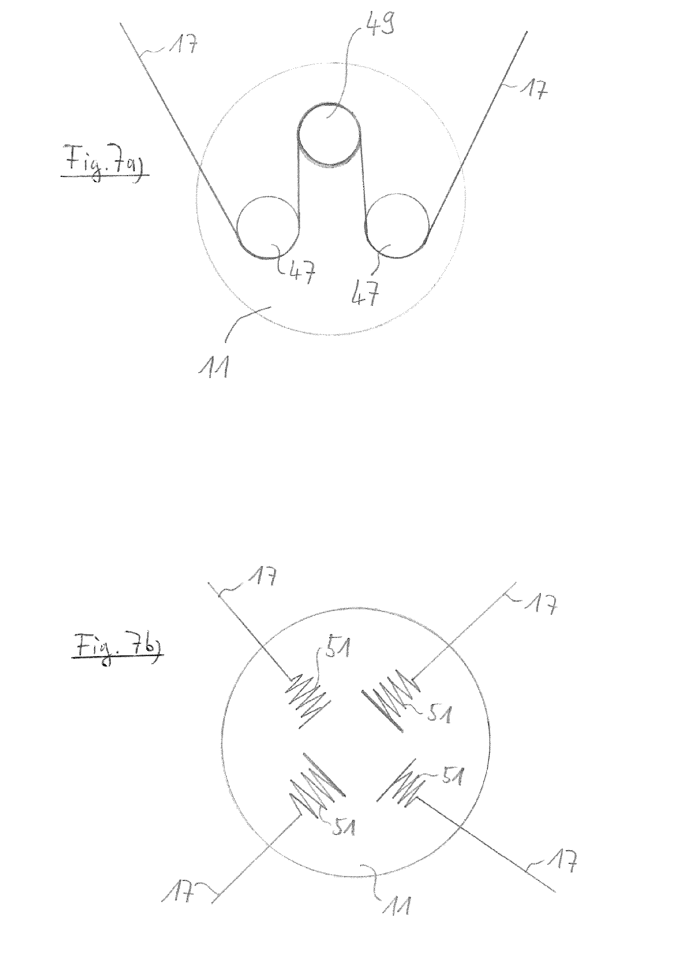

In Fig. 7a und 7b sind mögliche Ausführungsformen eines Reinigungskopfes 11 stark vereinfacht dargestellt.

Das Zugorgan 17 wird gemäß Fig. 7a über eine Umlenkrolle 47 gelenkt. Diese Umlenkrolle 47 ist vorzugsweise passiv ausgebildet. Sie kann jedoch auch die oben beschriebene Wickeleinrichtung 31 bilden.

Über die Rolle 47 wird das Zugorgan 17 einer Spule 49 zugeführt. Insbesondere durch einen motorischen Antrieb kann diese Spule 49 in Rotation versetzt werden und so einen Teil des Zugorgans 17 aufnehmen oder abgeben. Die Spule 49 bildet somit einen Puffer für das Zugorgan 17. Durch diese Spule 49 können durch eine Steuerung bedingte Ungenauigkeiten toleriert bzw. kompensiert werden. Über eine weitere, insbesondere als Wickeleinrichtung 31 ausgebildete, Umlenkrolle 47 wird das Zugorgan 17 wieder abgeführt.

Alternativ kann auf die gemeinsame Spule 49 verzichtet werden. Die Umlenkrollen 47 können stattdessen z. B. als insbesondere federbelastete Spulen ausgebildet sein, die jeweils nur mit einem der insofern voneinander getrennten Zugorgane 17 zusammenwirken.

In Fig. 7b ist eine alternative Ausführungsform eines Reinigungskopfes 11 lediglich rein schematisch zur Erläuterung der prinzipiellen Funktionsweise dargestellt. Beispielhaft sind hierbei vier Zugorgane 17 gezeigt, wobei auch lediglich drei oder zwei Zugorgane 17 vorgesehen sein können. Jedes Zugorgan 17 ist mit einem als Feder 51 ausgebildeten Puffer verbunden. Die Pufferung erfolgt somit rein mechanisch, d.h. insbesondere ohne eine motorisch angetriebene Spule.

Alternativ kann jedoch statt der Feder 51 beispielsweise eine Umlenkrolle 47 vorgesehen sein, welche insbesondere auch als Puffer 49 fungieren könnte. Diese kann z.B. motorisch angetrieben oder federbelastet sein.

Bei den Ausführungsformen gemäß Fig. 1, 2 und 4 könnte ein entsprechender Reinigungskopf 11 mehrere Spulen 49, Umlenkrollen 47 und/oder Federn 51 enthalten.

Eine bzw. mehrere Spulen 49 oder Federn 51 sind insbesondere bei Ausführungsformen mit drei oder vier Wickeleinrichtungen 31 bzw. Motoren zum Bewegen des Reinigungskopfes 11 vorteilhaft. Bei lediglich zwei Wickeleinrichtungen 31 bzw. Motoren gemäß Fig. 3 sind derartige Spulen 49 oder Federn 51 weniger wichtig, da eine exakte Steuerung in diesem Fall weniger Ungenauigkeiten aufweist.

Die Erfindung ermöglicht also einen besonders kostengünstigen und schnellen sowie effektiven Reinigungsbetrieb, der gerade für die Reinigung der wirksamen Flächen von Solar- und Photovoltaikanlagen von Vorteil ist.

### Bezugszeichenliste

- 11: Reinigungskopf
- 13: Reinigungsorgan, Bürstenwalze
- 15: Zugeinheit
- 17: Zugorgan
- 19: zu reinigende Fläche
- 21: Steuereinrichtung
- 23: Speicher
- 25: Umlenkeinrichtung
- 27: Aufnahme
- 29: Rahmen
- 31: Wickeleinrichtung
- 33: Träger der Zugeinheit
- 35: Achse
- 37: Feder
- 39: Spannabschnitt
- 41: Umlenkrolle
- 43: Träger des Reinigungskopfs
- 45: Antriebseinrichtung
- 47: Umlenkrolle
- 49: Spule, Puffer
- 51: Feder, Puffer

## Patentansprüche

1. Vorrichtung zum Reinigen von Flächen, insbesondere an Solar- oder Photovoltaikanlagen, mit
wenigstens einem Reinigungskopf (11), der zumindest ein Reinigungsorgan (13) aufweist, insbesondere eine in Rotation versetzbare Bürste, und einer Mehrzahl von Zugeinheiten (15), die jeweils direkt oder indirekt mittels eines Zugorgans (17) mit dem Reinigungskopf (11) zusammenwirken,
wobei der Reinigungskopf (11) durch koordiniertes Verändern der wirksamen Längen der Zugorgane (17) über die zu reinigende Fläche (19) bewegbar ist.

2. Vorrichtung nach Anspruch 1,
wobei die Zugeinheiten (15) bezüglich der zu reinigenden Fläche ortsfest angeordnet sind.

3. Vorrichtung nach Anspruch 1 oder 2,
wobei eine Steuereinrichtung (21) vorgesehen ist, mittels welcher die Zugeinheiten (15) zum koordinierten Verändern der wirksamen Längen der Zugorgane (17) ansteuerbar sind, insbesondere automatisch gemäß einem vorgegebenen Programm.

4. Vorrichtung nach einem der vorhergehenden Ansprüche,
wobei ein, insbesondere mechanischer, Puffer (49, 51) vorgesehen ist, bevorzugt eine Spule oder ein Speicher, wobei durch den Puffer (49, 51) ein Teil zumindest eines Zugorgans (17) aufnehmbar und/oder abgebbar ist.

5. Vorrichtung nach Anspruch 4,
wobei der Puffer (49, 51) dazu ausgebildet sind, Ungenauigkeiten einer Steuereinrichtung (21) auszugleichen.

6. Vorrichtung nach Anspruch 4 oder 5,
wobei der Puffer (49, 51) in den Reinigungskopf (11) oder in eine Zugeinheit (15) integriert ist.

7. Vorrichtung nach einem der vorhergehenden Ansprüche,
wobei ein, insbesondere mechanischer, Kraft- oder Energiespeicher (23) vorgesehen ist, bevorzugt eine Federanordnung (37), wobei der Speicher (23) durch einen koordinierten Betrieb der Zugeinheiten (15) füllbar und entleerbar ist.

8. Vorrichtung nach Anspruch 7,
wobei der Speicher (23) dazu dient, das Reinigungsorgan (13) in eine Reinigungsbewegung relativ zu einem Träger (43) des Reinigungskopfes (11) zu versetzen.

9. Vorrichtung nach Anspruch 7 oder 8,
wobei der Reinigungskopf (11) durch einen koordinierten Betrieb der Zugeinheiten (15) zu einem Intervallbetrieb in der Lage ist, bei dem der Speicher (23) abwechselnd gefüllt und geleert wird, wobei das Entleeren des Speichers (23) zumindest teilweise zur Erzeugung einer Reinigungsbewegung des Reinigungsorgans (13) nutzbar ist, wobei bevorzugt der Reinigungskopf (11) beim Füllen des Speichers (23) stillsteht und sich beim Entleeren des Speichers (23) über die zu reinigende Fläche (19) bewegt.

10. Vorrichtung nach einem der vorhergehenden Ansprüche,
wobei wenigstens eine, insbesondere träger- und/oder schlittenlose, Umlenkeinrichtung (25) vorgesehen ist, mit der ein erstes Zugorgan (17) umlenkbar und die mittels eines zweiten Zugorgans (17) relativ zu der zu reinigenden Fläche (19) bewegbar ist.

11. Vorrichtung nach einem der vorhergehenden Ansprüche,
wobei die Zugeinheiten (15) jeweils eine Wickeleinrichtung (31) für das Zugorgan (17) aufweisen.

12. Vorrichtung nach einem der vorhergehenden Ansprüche,
wobei an zumindest einer Zugeinheit (15) eine außerhalb der zu reinigenden Fläche (19) liegende Parkposition für den Reinigungskopf (11) vorgesehen ist.

13. System mit einer Solar- oder Photovoltaikanlage und wenigstens einer Vorrichtung nach einem der vorhergehenden Ansprüche.

14. System nach Anspruch 13,
wobei die Zugeinheiten (15) stationär außerhalb der zu reinigenden Fläche (19) angeordnet sind, insbesondere lösbar an einem die zu reinigende Fläche (19) umgebenden Rahmen (29), wobei bevorzugt der Rahmen (29) viereckig ausgeführt und in jedem Eckbereich oder lediglich in zwei oder drei Eckbereichen eine Zugeinheit (15) angeordnet ist.

15. System nach Anspruch 13 oder 14,
wobei die Zugeinheiten (15) von der zu reinigenden Fläche (19) und/oder von der Solar- oder Photovoltaikanlage getrennt angeordnet sind.
